# EUROPEAN PATENT APPLICATION

(11) **EP 0 768 201 A1**
(43) Date of publication of application: **16.04.1997**
(21) Application number: 96116561.0
(22) Date of filing: 16.10.1996
(51) Int. Cl.: B60J 10/04

(54) **Inner seal structure integrated with door glass for motor vehicles**

(30) Priority: 16.10.1995 JP 291657/95
(71) Applicant: Tokai Kogyo Co. Ltd., Ohbu-shi, Aichi-ken (JP)
(72) Inventor: Higuchi, Kazuyoshi, Ohbu-shi, Aichi-ken (JP); Kawanishi, Kengo, Ohbu-shi, Aichi-ken (JP)
(74) Representative: Naumann, Ulrich, Dr.-Ing.

(57) **Abstract**

The inner seal for a motor vehicle window comprises an elastomeric, ridge-shaped sealing member (30) fixed to the inner face (26) of the window glass (21) and positioned near the lower edge of the window glass and so that it comes into engagement with a sealing surface (31) formed on the inside of the inner door lining (25) just as the window reaches its closed position. There is no friction between the sealing member and the glass. Consequently, the force required to open and close the window is reduced, and abrasion of the inner face of the window by dust is avoided.

## Description

### Summary of the Invention

This invention relates generally to seals, and in particular to an inner seal structure for sealing the gap between the inner lining of an motor vehicle door and the sliding glass of the door window.

In a conventional automobile door, a first elastic weather strip mounted on the outer panel of the door is in sliding contact with the outer surface of the window glass, and a similar elastic weatherstrip mounted on the inner lining of the door is in sliding contact with the inner surface of the window.

One problem with the conventional door structure is that, because of the friction between the inner weatherstrip and the inner surface of the window glass, a large driving force is required to open and close the window. Another problem is that, with repeated opening and closing of the window, dust accumulated between the inner weatherstrip and the inner surface of the glass may eventually abrade and impair the inner surface of the glass.

The principal object of this invention is to provide a reliable inner seal structure, which aids the outer seal in preventing the entry of noise, dust etc. when the window is closed, but which does not contribute to the force requirement for opening and closing the window, and is not likely to impair the inner surface of the glass.

In a motor vehicle, the outer weatherstrip must be designed to prevent entry of noise, dust and rain into the interior of the vehicle and also to prevent entry of rain water into the interior of the door. However, the function of the inner seal structure is only to seal the interior side of the glass, primarily to assist the outer seal in preventing entry of noise and dust into the interior of the vehicle when the window is closed. It is not needed to prevent the entry of rain water into the vehicle. Furthermore, noise, dust etc. will naturally enter the vehicle when the window is open. Therefore, the inner seal will perform satisfactorily even if it provides a seal between the door and the inner surface of the glass only when the window is closed. Thus, while the outer weatherstrip must be constantly in contact with the outer surface of the glass, the inner seal need only be operative to provide a seal when the window is closed. The inner seal in accordance with the invention does not make sliding contact with the inner surface of the glass while the window is being opened and closed, but is nevertheless able to provide a reliable seal when the window is closed.

Briefly, in accordance with the invention, a novel inner seal structure is provided in a motor vehicle door having a glass window slidable between open and closed positions, and having an inner door lining disposed opposite to the inner surface of the glass. The inner seal structure comprises a contact surface formed on the inner door lining, and a sealing member fixed to the inner surface of the glass, and positioned on the glass so that it engages the contact surface when the window is in its closed position.

When the glass is raised toward its closed position, the sealing member moves as a unit with the window, and contacts the contact surface of the inner door lining, thereby sealing the gap between the door and the inner surface of the glass, and thereby aiding the outer weatherstrip in keeping out noise and dust. When the glass is lowered to open the window, the sealing member moves downward with the glass and away from the contact surface of the door lining, thereby releasing the inner seal.

Because it is integrated with the inner surface of the glass the inner seal member comes into contact with the contact surface of the inner door lining only when the window is closed. There is no sliding contact between the seal and the inner surface of the glass during the opening and closing movements of the glass, and consequently the force required to open and close the window is reduced, and the inner surface of the window is less likely to become scratched by dust or other abrasive particles.

Further objects, details and advantages of the invention will become apparent from the following detailed description, when read in conjunction with the drawings.

### Description of the Drawings

FIG. 1 is a fragmentary cross section of a motor vehicle door showing the inner seal structure in accordance with a first embodiment of the invention;
FIG. 2 is a fragmentary cross sectional view showing an inner seal structure in accordance with an alternative embodiment of the invention;
FIG. 3 is a front elevational view of a sheet of door glass provided with a sealing member in accordance with the invention;
FIG. 4 is a cross-sectional view corresponding to FIG. 1, but showing the door glass in a partially lowered condition to open the window; and
FIG. 5 is a fragmentary cross section of a motor vehicle door showing a conventional inner seal structure.

### Detailed Description

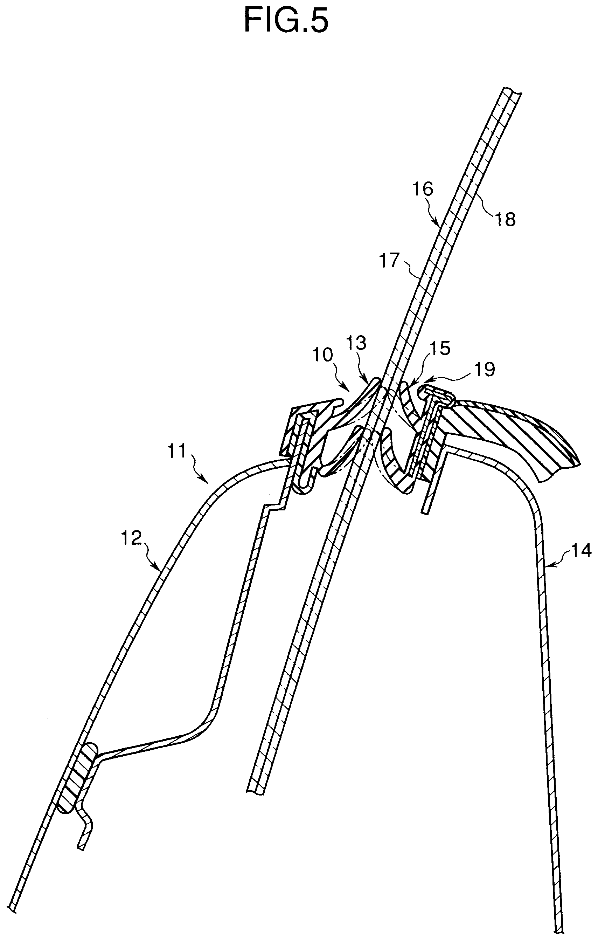

Referring first to FIG. 5, the conventional motor vehicle door 11 has an outer panel 12 on which is mounted an outer seal structure 10 comprising an elastomeric outer weatherstrip 13. An inner seal structure 19, comprises a similar elastomeric inner weatherstrip 15. The outer weatherstrip 13 is continuously in contact with the outer surface 17 of window glass 16, and the inner weatherstrip 15 is likewise continuously in contact with the inner surface 18 of the window glass. As mentioned previously, the friction between the inner weatherstrip 15 and the glass contributes to the total force requirement for opening and closing the window. Furthermore, because the inner weatherstrip is continuously in contact with the inner window glass surface 18, if dust comes between the inner weatherstrip and the glass, the appearance of the inner surface of the glass may eventually be impaired by abrasion.

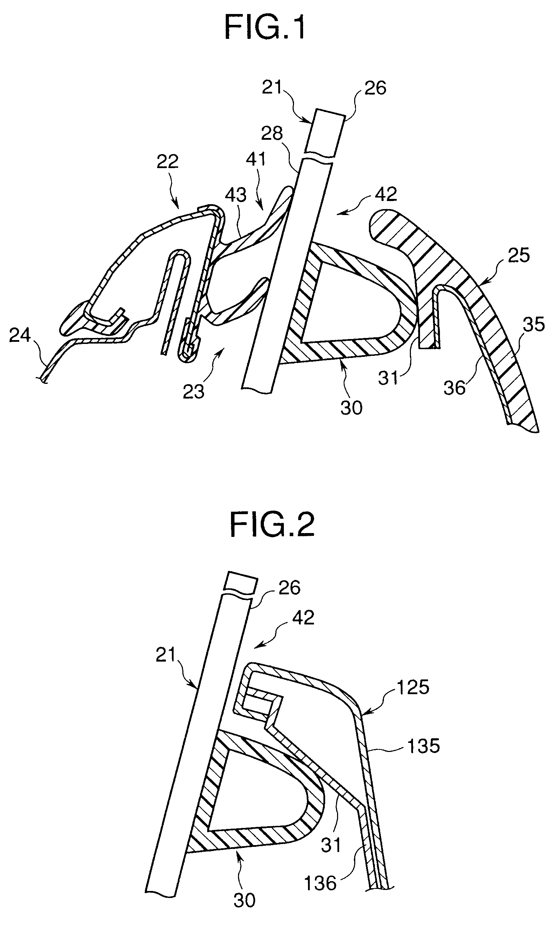

In the first embodiment of the invention, as shown in FIG. 1, the outer seal structure 41 is similar to that of the conventional outer seal of FIG. 5. It comprises an outer elastic weatherstrip 43 attached by clips (not shown) to the outer skin 24 of a door 22. The outer weatherstrip is in continuous contact with the door glass 21 and seals the gap between the outer part of the door 22 and the outer surface 28 of the door glass.

The inner seal structure 42 is composed of a sealing member 30 and a cooperating contact surface 31 formed on the inside door lining 25. The inner seal structure is designed to provide a seal only when the window is closed.

The door glass 21 is vertically movable by a conventional manual or motor-driven window operating mechanism (not shown). The glass moves upwardly out of, or downwardly into, a glass housing space 23 within the interior of the door 22, defined between the outer door skin 24 and the inside door lining 25. The door lining 25 is a member secured to the door, and may be an inner panel itself, or an elongated member provided on the inner panel. The top of the door lining 25 is inclined, and projects outward toward the door glass over the door glass housing space 23.

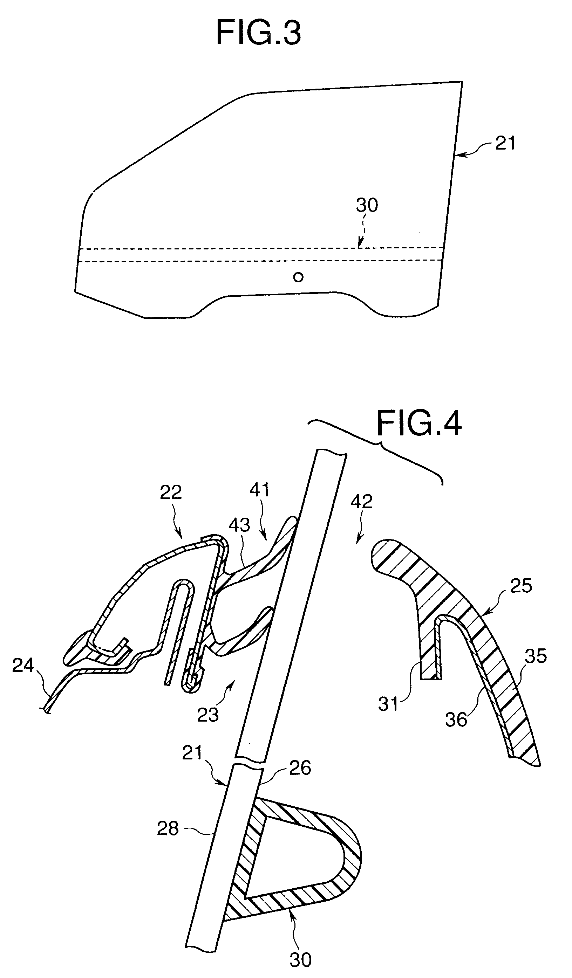

An elastic sealing member 30 is fixed to the inner face of the door glass 21 near the lower edge of the door glass. The sealing member is preferably straight and horizontally elongated, as shown in FIG. 3. The sealing member is produced from a flexible, resilient material such as a thermoplastic elastomer or a thermosetting elastomer. It is also preferably ridge-shaped as shown in FIG. 1, having a flat base against the face of the window glass with upper and lower sides extending away from the glass and converging toward a rounded peak. The wide base of the sealing member enables it to be attached securely to the face of the glass, while the greater flexibility of the peak of the ridge helps to ensure a complete seal along the length of the sealing member. Preferably, the sealing member is hollow, as shown, but can be solid if made from a sufficiently flexible material, for example a sponge-like elastomeric polymer.

It is a simple matter to secure the sealing member 30 to the glass. The sealing member may be made integral with the glass 21 by extrusion molding. In this case, the molding process is carried out by moving the glass with respect to an extruder die, as disclosed in Japanese laid-open application Hei 6-71722 (1994). Alternatively, the sealing member nay be made integral with the door glass by injection molding, or by bonding it to the face of the door glass with an adhesive.

The contact surface 31 is located in the vicinity of the upper end of the inner surface of the door lining 25 and is opposed to the inner face 26 of the door glass 21. This contact surface 31, in the case of FIG. 1, is formed on the door trim 35 of the door lining, the lining being composed of the door trim, which is a synthetic resin, and a formed metal inner panel 36. The rounded peak of the ridge-shaped sealing member 30 on the window glass engages the contact surface 31 when the window is raised, just before the window glass reaches its fully closed position.

In the alternative embodiment illustrated in FIG. 2, the contact surface 31 is formed on an inner panel 136 of the door lining 125. The door lining 125 is composed of a door trim 135 in the form of a synthetic resin sheet and a formed metal inner panel 136.

In transverse cross-section, as shown in both FIG. 1 and FIG. 2, the contact surface 31 is oblique with respect to the direction of movement of the window, and disposed so that, as the window moves upward, it engages and stops the rounded peak of the sealing member 30 just before the window reaches its uppermost position. This way, the peak of the ridge-shaped sealing member deforms slightly, and the sealing member, by virtue of its resilience, maintains sealing pressure against surface 31.

The inner seal structure 42 operates as follows. When the window glass 21 is raised to close the window, the sealing member 30 moves upward as a unit with the glass 21 and engages the contact surface 31 of door lining 25 in FIG. 1, or door lining 125 in FIG. 2, thus sealing the gap between the inner surface 26 of the glass and the door 22. The seal thus formed when the window is closed aids the outer seal structure in keeping noise and dust out of the interior of the vehicle.

When the glass 21 is lowered to open the window, the sealing member 30 moves downward together with the glass as shown in FIG. 4, away from the contact surface 31, breaking the seal between the glass and the door 22. The fact that there is a gap between the glass and the inner lining of the door when the window is open is immaterial, because noise and dust will enter the interior of the vehicle through the open window.

The sealing member 30 contacts the door lining 25 only when the window is closed, and does not contact any part of the door while the window is being opened and closed. On the other hand, the weatherstrip 43 of the outer seal structure 41 is in continuous contact with the outer surface 28 of the glass to prevent entry of noise and dust into the interior of the vehicle when the window is closed, and, to prevent the entry of rain water into the glass housing space 23 through a gap between the outer surface 28 of the glass and the door skin 24 regardless of whether the window is open or closed.

The absence of sliding contact on the inner surface of the glass during its vertical movement avoids friction, thereby reducing the force required to effect vertical movement of the glass and reducing the likelihood of abrasive impairment of the appearance of the inner surface of the glass.

Various modifications can be made to the seal described. For example, whereas the contact surface 31 is normally straight and horizontal in elevational view, as shown in FIG. 3, the contact surface can be inclined, or may deviate from its straight configuration, provided that the shape of the sealing member 30 is modified correspondingly. For example, if the contact surface 31 is inclined, the sealing member 30 must also be inclined at the same angle, so that the sealing member meets the contact surface along a line substantially coextensive with the width of the window. Similarly, the contact surface may be gradually curved in elevational view, provided that the sealing member is correspondingly curved. These and other modifications can be made to the seal structure described without departing from the scope of the invention as defined in the following claims.

## Claims

1. In a motor vehicle door having a window glass with inner and outer surfaces, the glass being slidable between open and closed positions, and an inner door lining disposed opposite to the inner surface of the glass, an inner seal structure comprising a contact surface formed on the inner door lining, and a sealing member fixed to the inner surface of the glass, and positioned on the glass so that it engages the contact surface only when the glass is in its closed position.

2. A motor vehicle door with an inner seal structure according to claim 1, in which the sealing member is ridge-shaped.

3. A motor vehicle door with an inner seal structure according to claim 1, in which the sealing member comprises a flexible elastomer.

4. A motor vehicle door with an inner seal structure according to claim 1 in which the sealing member is positioned on the glass so that, throughout its range of movement except when the glass is in its closed position, it is substantially free of sliding frictional contact with other elements of the door.

5. In a motor vehicle door having a window glass with inner and outer surfaces, the glass being slidable between open and closed positions, and an inner door lining disposed opposite to the inner surface of the glass, an inner seal structure comprising sealing means providing a seal between the inner door lining and the inner surface of the glass only when the glass is in its closed position, said sealing means being substantially free of sliding frictional contact with elements of the door throughout the range of movement of the glass except when the glass is in its closed position.
